# EUROPEAN PATENT SPECIFICATION

(11) **EP 3 167 022 B1**
(45) Date of publication and mention of the grant of the patent: **11.09.2019**
(21) Application number: 16734737.6
(22) Date of filing: 20.05.2016
(51) Int. Cl.: C09D 175/00, C08G 18/12, C08G 18/32, D06M 15/564, C08G 18/48, C08G 18/61

(54) **POLYURETHANE COMPOSITION**
POLYURETHANZUSAMMENSETZUNG
COMPOSITION DE POLYURÉTHANE

(30) Priority: 21.05.2015 IT UB20150649
(43) Date of publication of application: 17.05.2017
(73) Proprietor: Sarp S.r.l., 20010 San Giorgio su Legnano (MI) (IT)
(72) Inventor: CASTELLI, Christian, 21052 Busto Arsizio (VA) (IT)
(74) Representative: Montelatici, Linda Anna
(86) International application number: PCT/IB2016/052968
(87) International publication number: WO 2016/185434

(56) References cited:
- EP-A1- 2 308 908
- KR-B1- 101 406 932
- US-A- 5 510 432
- US-A1- 2008 146 765
- US-A1- 2009 124 766
- US-A1- 2010 028 270
- US-B1- 6 451 963

## Description

The present invention relates to a thermosetting polyurethane composition free of solvents and diluents, for the coating of flexible supports. In particular, the thermosetting polyurethane composition according to the present invention is suitable for the coating of fabrics, nonwoven fabrics, textiles, paper, leather and the like, and can be used both by means of direct coating, and by means of indirect coating procedures.

A number of polyurethane based compositions are known, suitable for protective coatings, which are formed of a prepolymer containing isocyanate groups blocked with oximes and of a cross-linking diamino agent.

Italian patent IT1223435 in the name of the Applicant describes a polyurethane composition for coating flexible substrates such as textiles, fabrics, non-woven fabrics, leather and the like, comprising: a prepolymer terminated with aromatic isocyanate groups blocked with a ketoxime, obtained from an aromatic diisocyanate and a polyhydroxy compound; a chain extender consisting of a tricyclic polyamine, preferably 4,8-bis (aminomethyl)-tricyclodecane; and pigments, fillers, stabilizers, antioxidants, foaming agents and other possible known additives.

A first disadvantage of this composition lies in the fact that the prepolymer blocked with oximes necessarily require a dilution by means of solvents due to the high viscosity of the prepolymer.

Another disadvantage of this composition consists in that it comprises a large amount of oximes, which are so far essential for the long-term stability of the polyurethane compositions comprising a prepolymer and a chain extender, that are intended to be subjected to polymerization reaction after having been applied on the substrate to be coated. These oximes are characterized by an extremely unpleasant odor which is passed on to the final product coated with the polyurethane composition, for example a fabric. Furthermore, it is known that certain oximes are considered toxic compounds, for example 2-butanone oxime is considered a harmful and potentially carcinogenic compound.

For the reasons stated above, in some European countries the use of oximes in polyurethane compositions for coating will be prohibited by current law. As a result, products including, in separate containers, an unblocked isocyanate prepolymer and a crosslinking agent, are presently on the market. However, the presence of free isocyanates ensures that these products have a limited stability in time. Furthermore, the final physical and mechanical features of the polymer obtained from these products are inferior than those of the polymers obtained starting from prepolymers with blocked isocyanate groups.

Furthermore, it is desirable to provide a polyurethane composition which, when subjected to appropriate crosslinking reaction, may provide a breathable coating usable in the furniture and / or clothing field.

The object of the present invention is therefore to provide a polyurethane composition free from said drawbacks, and a flexible support coated with such composition. Said object is achieved with a polyurethane composition whose main features are specified in the first claim, while other features are specified in the remaining claims.

Advantageously, the polyurethane composition according to the present invention does not require the use of solvents for its dilution. In fact, the composition has a viscous and stringy consistency and can be applied as such, without solvent, on flexible substrates to then undergo a crosslinking reaction.

Furthermore, the composition according to the present invention has no unpleasant odors, being devoid or comprising a limited amount of oximes.

Finally, the composition according to the present invention gives rise, once crosslinked, to polyurethanes having excellent physical and mechanical and breathability features.

According to an advantageous embodiment of the invention, the composition also includes a complex of flame retardant substances.

Further advantages and features of the present invention will be apparent to those skilled in the art from the following detailed and non-limiting description of an embodiment thereof with reference to the accompanying examples.

The polyurethane composition for coating of flexible supports, according to the present invention comprises:
a) a prepolymer A having a molecular weight in the range between 5000 and 12000 terminated with blocked isocyanate groups, said prepolymer being obtained by reaction of a diisocyanate with a polyhydroxy compound containing from two to four reactive hydroxy groups and having an average molecular weight in the range from 1000 to 6000;
b) a prepolymer B terminated with blocked isocyanate groups, obtained by reaction of an aliphatic diisocyanate with a polysiloxane compound.
wherein said prepolymer A and said prepolymer B comprise isocyanate groups blocked with dimethylpyrazole.

According to a preferred embodiment of the invention, the polyurethane composition also includes a chain extender consisting of a bicyclic or tricyclic polyamine. Said chain extender can be supplied to the end user in admixture with said prepolymer A and said prepolymer B, or it can be contained in a separate container, in order to be mixed with said prepolymer A and said prepolymer B by the end user.

Furthermore, the polyurethane composition according to a preferred embodiment of the invention also comprises at least one flame retardant additive containing polyphosphates.

In fact, it has been found that the specific combination of a prepolymer A, a prepolymer B having the above described characteristics and a flame retardant additive based on polyphosphates confers to the obtained polymer after the crosslinking reaction, operated by the end user, optimal elasticity, breathability and flame-retardant features that allow the use of the polymer in various fields such as those of sports clothing and furniture.

Preferably, said prepolymer B has a molecular weight of between 4000 and 8000. Said polysiloxane compound preferably contains from two to four reactive hydroxyl groups and has an average molecular weight in the range from 1500 to 3500.

According to a preferred embodiment, such a flame retardant additive comprises at least one additive selected from the group consisting of ammonium polyphosphate, isodecyl diphenyl phosphate, triphenyl phosphate and mixtures thereof.

In the polyurethane composition according to the present invention the weight ratio between said prepolymer A and said prepolymer B is preferably between 4: 1 and 6: 1, and more preferably is between 4.8: 1 and 5.2: 1.

Such a flame retardant additive is present in the polyurethane composition according to the present invention in an amount between 25% and 35% with respect to the total weight of the composition.

Preferably, said prepolymer A and / or said prepolymer B comprise isocyanate groups blocked with 3,5-dimethylpyrazole.

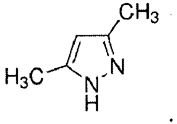

In fact, thanks to the fact that at least a part of the isocyanate groups of the prepolymers A and B are blocked with dimethylpyrazole, the composition according to the present invention comprises a reduced or null amount of oximes.

In particular, according to a preferred embodiment, in said prepolymer A and / or said prepolymer B said isocyanate groups blocked with dimethylpyrazole, preferably with 3,5-dimethylpyrazole, are at least 15% of the total number of the isocyanate groups of prepolymers A and B. According to another embodiment of the invention, the isocyanate groups blocked with dimethylpyrazole are at least 50%, or at least 75%, compared to the total of the isocyanate groups of the prepolymers A and B. More preferably, the isocyanate groups blocked with dimethylpyrazole are at least 90%, or 98% of the total number of the isocyanate groups of the prepolymers A and B.

In other words, in the preparation of the prepolymers A and B with blocked isocyanate groups, is used a blocking or protecting agent of isocyanate groups comprising dimethylpyrazole, preferably, 3,5-dimethylpyrazole, in an amount equivalent to between 15% and 103 % with respect to the equivalents of the isocyanate groups of the prepolymers A and B. More preferably said blocking or protecting agent of the isocyanate groups comprises dimethylpyrazole, preferably, 3,5-dimethylpyrazole, in an amount higher than 90% in equivalents, even more preferably higher than 98 %, with respect to the equivalents of the isocyanate groups of the prepolymers A and B.

The protecting agent may also comprise a ketoxime.

The ketoxime is selected from the group comprising the oximes of saturated and unsaturated aliphatic, cycloaliphatic, aromatic ketones, and mixtures thereof.

The choice of ketoxime is related to its volatility at the polymerization temperature and the possibility of formation and morphology of foams in the course of the polymerization reaction.

Preferably, in the composition according to the present invention, there is used a ketoxime selected from the group formed by acetone-ketoxime, methyl ethyl ketone oxime, cyclohexanone oxime. Particularly preferred is methyl ethyl ketone oxime.

In the polyurethane composition according to the present invention, it said prepolymer A has an average molecular weight of between 5000 and 12000, preferably between 8000 and 10000. More preferably, the average molecular weight of prepolymer A is comprised between 9000 and 10000.

The polyhydroxy compound for obtaining said prepolymer A has instead an average molecular weight in the range from 1000 to 6000 and preferably is between 1500 and 3500. More preferably, the average molecular weight of the polyhydroxy compound for obtaining said A prepolymer is between 1000 and 2000.

In the polyurethane composition according to the present invention, said prepolymer B has an average molecular weight of between 4000 and 8000, preferably between 4500 and 7000.

The polysiloxane compound for obtaining said prepolymer B has instead an average molecular weight in the range between 1500 and 3500 and preferably is between 1800 and 2200.

For obtaining prepolymer A, both aliphatic and aromatic isocyanates can be used, in particular all those that are commonly used for the production of polyurethanes.

For example, 2,4-toluene diisocyanate, 2,6-toluene diisocyanate (TDI), 1,5-naphtalene diisocyanate, 2,4'- diphenylmethane diisocyanate, 4,4'-diphenylmethane diisocyanate (MDI), 4,4'-dimethylcyclohexyl diisocyanate (HMDI), 1,3-bis (1-isocyanato-1-methylethyl) benzene (TMXDI), xylylene diisocyanate (XDI), 4,4-diphenyl dimethyl methane diisocyanate, 2- and 4- alkyl diphenyl methane diisocyanate, 4,4-dibenzyl diisocyanate, 1,3-phenylene diisocyanate, 1,4-phenylene diisocyanate, tolylene diisocyanate (TDI) and its isomers, hexamethylene diisocyanate (HDI), trimethyl hexamethylene diisocyanate, naphthalene-1,5-diisocyanate (NDI), hydrogenated isophorone diisocyanate (IPDI) can be used.

Preferably, said diisocyanate for obtaining said prepolymer is selected from the group consisting of 2,4-toluene diisocyanate, 2,6-toluene diisocyanate, 1,5-naphtalene diisocyanate, 4,4'-diphenylmethane diisocyanate (MDI), 2,4'-diphenylmethane diisocyanate, m-phenylendiiso-propylidene isocyanic acid (TMXDI) and mixtures thereof.

For obtaining the prepolymer B any aliphatic diisocyanate suitable for the preparation of polyurethane compositions is usable. Preferably, said aliphatic diisocyanate for obtaining said prepolymer B is selected from the group consisting of hexamethylene diisocyanate (HDI), trimethyl hexamethylene diisocyanate, 4,4'-methylenebis (cyclohexyl isocyanate) (HMDI), isophorone diisocyanate (IPDI) and mixtures thereof.

As polyhydroxy compound for obtaining prepolymer A all the polyhydroxylated compounds commonly used for the production of polyurethanes can be used, both in the class of polyethers and in that of the polyesters. Preferably, the polyhydroxy compound for obtaining the prepolymer is selected from the group consisting of polyethylene glycol, polypropylene glycol, polytetramethylene glycol, polyhexamethylene glycol, hydroxyl terminated polybutadienes, hydroxyl terminated polyesters from glycols and / or triols with bicarboxylic acids, hydroxyl terminated polycaprolactones and mixtures thereof.

As the polysiloxane compound for obtaining the prepolymer B any siloxane polymer, reactive with isocyanates may be used. For example, polydimethylsiloxane (PDMS) can be advantageously used.

As chain extender it is preferably used:
a bicyclic diamine of formula 1, or a tricyclic diamine of formula 2: 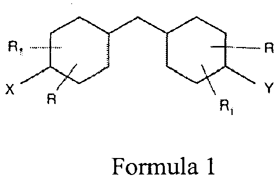 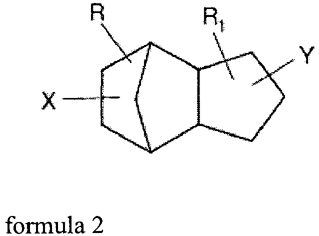 in which R and R₁ are selected from the group consisting of hydrogen and methyl group, X and Y are selected from the group consisting of NH₂, CH₂NH₂, CH₂NH (CH₂)₃NH₂ and CH₂N((CH₂)₃NH₂)₂.

A preferred compound within formula 1 is 4,4'-diamino-3,3'-dimethylaminomethane:

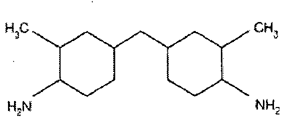

Other usable bicyclic amines are for example 4,4'-diaminodicyclohaxylmethane and 4,4'-diamino-3,3'-5,5'-tetramethyldicyclohexylmethane.

A preferred compound within formula 2 is the cyclic diamine: 4,8-bis (aminotrimethyl) tricyclodecane having the following formula:

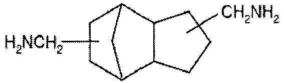

Other tricyclic diamines used as chain extenders are N- (3-aminopropyl) - TCDDA; and N, N'-bis (3-aminopropyl) -TCDDA prepared according to patent US 4,299,376, or their mixtures with TCDDA, which are used in the same ratios indicated above between the isocyanate groups of the blocked prepolymer and the amino groups of the polyamine.

The composition according to the present invention may advantageously comprise one or more additives selected from the group formed by pigments, fillers, stabilizers, antioxidants, propellants, foaming agents, defoaming agents and other flame retardants.

Prepolymer A is prepared according to known processes by reacting, at a temperature between 80 ° C and 85 ° C, the polyhydroxy compound with an excess of diisocyanate, so that the ratio between the isocyanate groups of the diisocyanate and the hydroxyl groups of the polyhydroxy compound is between 1.6: 1 and 2.5: 1, preferably of 2.1: 1.

Separately, the prepolymer B may be prepared by reacting a polysiloxane with an aliphatic isocyanate at a temperature comprised between 110 ° C and 130 ° C, for example at 120 ° C for about 8 hours, in the presence of a catalyst.

The amounts of the reactants are determined so as to obtain a prepolymer A having a free isocyanate content of at least 3%, preferably comprised between 3.5% and 4.5%. As regards prepolymer B, the free isocyanate content is at least 5%, preferably between 5.5% and 5.5%.

As a catalyst, any catalyst used for reactions of formation of urethanes is usable, for example a titanium-based catalyst.

Subsequently, the prepolymer A and the prepolymer B if necessary, thus obtained, are reacted separately, to block all the free isocyanate groups present in them, in amounts from two to four per mole of the prepolymer, by reaction with an equivalent amount or more of a protecting agent comprising 3,5-dimethylpyrazole, according to known processes.

In particular, the prepolymers are reacted with said protecting agent at a temperature between 80 °C and 90 °C. The protecting agent includes 3,5-dimethylpyrazole in a quantity comprised between 18% and 103% in equivalent with respect to the equivalents of isocyanate groups to block, preferably in amounts greater than 90%, more preferably greater than 98% in equivalents compared to the equivalents of isocyanate groups that are to be blocked.

An inert filler, for example silicon dioxide,. can be then added to prepolymer B having blocked isocyanate groups.

Prepolymer A having blocked isocyanate groups is optionally mixed with the prepolymer B having blocked isocyanate groups. The polyamine chain extender b) is added at a temperature not exceeding 50 °C. Preferably, the mixing is carried out at room temperature. The ratio of the blocked prepolymers A and possibly B and of the polyamine chain extender b) is approximately stoichiometric, that is, such that the ratio in equivalents between the isocyanate groups of the blocked prepolymer and the amino groups of the polyamine is between 0.95: 1 and 1.35: 1, preferably 1: 1.

To cause crosslinking, the mixture of the prepolymer B with the chain extender is brought to a temperature of between 150 ° C and 160 ° C, and maintained at this temperature for a time ranging from 2-3 minutes to about 20 minutes.

The polyurethanes obtained from the composition according to the present invention are free of odors and have excellent physical-mechanical and aesthetic characteristics, in particular of firmness and resilience.

The compositions according to the present invention can be used both by the direct coating process on a support, such as for example a textile or fabric in general, with a single layer or more layers, and by the indirect transfer procedure. In the latter procedure, the composition is spread on a suitable temporary support, such as paper, cardboard or similar, which is removed after curing of the composition.

Further advantages and characteristics of the composition according to the present invention will become apparent to those skilled in the art from the following examples having non-limiting value.

### EXAMPLE 1 (COMPARATIVE)

113.4 g of hydroxyl-bifunctional polypropylene glycol having an average molecular weight of 2000 and 42.5 g of hydroxyl-trifunctional polypropylene glycol having an average molecular weight of 2800 were charged, under a 3000 1 / h nitrogen flow, in a glass laboratory reactor with steel fittings, steel anchor mixer and 50 -2000 RPM / min electronic motor.

0,004 g of tetrakis (3- (3,5di-tert-butyl-4-hydroxyphenyl) propionate) pentaerythritol antioxidant; 0.004 g of ethylenediaminetetraacetic acid (EDTA); and 0.0077 g of phosphoric acid were also charged in the reactor.

39.8 g of MDI (4,4'-diphenylmethane diisocyanate) were added, by heating at a temperature of 80 ° C for 3 hours.

A prepolymer having averagely three NCO groups per mole was obtained.

After titration of the NCO functional group in excess, it was cooled to a temperature of 70 ° C and mixture of 12.83 g of 2-butanone oxime and 1.89 g of 3,5-dimethylpyrazole was added. The temperature was maintained at 90 ° C for 1 hour.

Then, 10.5 g of propylene glycol diacetate were charged to regulate the viscosity.

The thus obtained blocked prepolymer was discharged from the reaction vessel.

100 grams of such a blocked prepolymer were mixed with 8.85 g of 3,3'-dimethyl-4,4'-diaminodicyclohexyl methane (determined according to the ratio blocked NCO / NH₂) thus obtaining a viscous and stringy, colorless and transparent composition.

The composition thus obtained was spread on cotton, polyester and polyamide fabrics, and placed in a baking oven at a temperature of 155 ° C for 3 min, thus obtaining a waterproof, resilient and tenacious resin-coated fabric.

The resulting coated fabrics were free of residual odors of oxime.

### EXAMPLE 2 (COMPARATIVE)

489 g of hydroxyl-bifunctional polypropylene glycol having an average molecular weight of 2000 and 181 g of hydroxyl-trifunctional polypropylene with an average molecular weight of 2800 were charged into a glass laboratory reactor with steel fittings, steel anchor mixer and 50 -2000 RPM / min electronic motor under a 3000 1/h nitrogen flow .

Then, 0.188 g of pentaerythritol tetrakis (3- (3,5 -di-tert-butyl-4-hydroxyphenyl) propionate) antioxidant were loaded.

0.033 g of ethylenediamine tetraacetic acid (EDTA).
0.033 g of orthophosphoric acid.
166 g of TMXDI (m-phenylene diisopropylidene isocyanic acid) were added and it was warmed to a temperature of 100 ° C for 4 hours, to obtain a prepolymer having averagely three NCO groups per mol. After verification of the functional NCO group in excess, cooling to a temperature of 70 °C was carried out. 70.05 g of 3,5-dimethylpyrazole were added, maintaining the temperature at 90 ° C for 1 hour.

100 grams of such blocked prepolymer was mixed with 9,39 g of 3,3'-dimethyl-4,4'-diaminodicyclo hexyl methane (determined according to the ratio blocked NCO / NH₂) thus obtaining a viscous and stringy, colorless and transparent composition.

The composition thus obtained was spread on polyester and polyamide cotton fabrics, and placed in a baking oven at a temperature of 155 ° C for 3 min, thus obtaining a resin-coated waterproof, resilient and tenacious fabric.

The resulting coated fabrics were free of residual odors of oxime.

### EXAMPLE 3

113.4 g of hydroxyl-bifunctional polypropylene glycol having an average molecular weight of 2000 and 42.5 g of hydroxyl-trifunctional polypropylene glycol having an average molecular weight of 2800 were charged under a nitrogen flow of 3000 1 / h, in a laboratory glass reactor with steel fittings, steel anchor mixer and 50 - 2000 RPM / min electronic motor.

0,004 g of pentaerythritol tetrakis (3- (3,5-di-tert-butyl-4-hydroxyphenyl) propionate) antioxidant; 0.004 g of ethylenediaminetetraacetic acid (EDTA); and 0.0077 g of orthophosphoric acid were also charged in the reactor.

39.8 g of MDI (4,4'-diphenylmethane diisocyanate) were added, by heating at a temperature of 80 ° C for 3 hours.

A prepolymer having averagely three NCO groups per mole was obtained.

After titration of the NCO functional group in excess, cooling to a temperature of 70 ° C was carried out and a mixture of 12.83 g of 2-butanone oxime and 1.89 g of 3,5-dimethylpyrazole was added. The temperature was maintained at 90 ° C for 1 hour. Then, 10.5 g of propylene glycol diacetate were loaded to regulate the viscosity. The blocked prepolymer A, thus obtained, was discharged from the reaction vessel.

For the preparation of the prepolymer B: 300.0 g of Ortegol® HPH1 were loaded under a nitrogen flow of 3000 1 / h , in a laboratory glass reactor with steel fittings, steel anchor mixer and 50 -2000 RPM / min electronic motor.

100.0 g of IPDI (isophorone diisocyanate) were added, by heating at a temperature of 80 ° C for 3 hours in the presence of 100 ppm titanate Tetra-N-Butyl TNBT basic catalyst.

After titration of the NCO functional group in excess, which turned out to be about 6%, 58.51 g of 3,5-dimethylpyrazole were added. The temperature was maintained at 120 ° C for 8 hours.

40.0 g of Aerosil 200 were then loaded as inert filler.

The blocked prepolymer B, thus obtained, was discharged from the reaction vessel and mixed with prepolymer A. The proportion between prepolymer A and prepolymer B was 4: 1 by weight.

A mixture of flame retardant additives, in weight amounts as shown in the following table, was then added:

| Component | Amount' |
|---|---|
| PREPOLYMER A | 800 g |
| PREPOLYMER B | 200 g |
| Ammonium polyphosphate, fine powder | 140 g |
| Isodecyl diphenyl phosphate | 96 g |
| triphenylphosphate | 20 g |
| TOTAL | 1256 g |

100 grams of such blocked prepolymer were mixed with 9,39 g of 3,3'-dimethyl-4,4'-diaminodicyclohexyl methane, thus obtaining a viscous and stringy, colorless and transparent composition,.

The thus obtained composition was spread on cotton, polyester and polyamide fabrics, and placed in a baking oven at a temperature of 155 ° C for 3 min, thus obtaining an elastic, breathable and flame retardant product.

The resulting coated fabrics were free of residual odors of oxime.

Possible modifications and/or additions may be made by those skilled in the art to the hereinabove disclosed and illustrated embodiment while remaining within the scope of the following claims.

## Claims

1. Polyurethane composition for coating flexible supports, comprising:
a) a prepolymer A having an average molecular weight between 5000 and 12000 containing blocked isocyanate groups, said prepolymer A being obtained by a reaction of a diisocyanate with a polyhydroxy compound containing from two to four reactive hydroxyl groups and having an average molecular weight between 1000 and 6000;
b) a prepolymer B containing blocked isocyanate groups, said prepolymer B being obtained by reaction of an aliphatic diisocyanate with a polysiloxane compound;
wherein said prepolymer A and/or said prepolymer B comprise isocyanate groups blocked with a dimethylpyrazole.

2. Polyurethane composition according to the previous claim, **characterized by** comprising:
c) a chain extender consisting of a bicyclic or tricyclic amine.

3. Polyurethane composition according to any of the previous claims, **characterized by** comprising:
d) at least one flame retardant additive containing polyphosphates.

4. Polyurethane composition according to any of the previous claims, **characterized in that** said prepolymer A and /or said prepolymer B comprise isocyanate groups blocked with 3,5-dimethylpyrazole.

5. Polyurethane composition according to any of the previous claims, **characterized in that**, in said prepolymer A and/or said prepolymer B, said isocyanate groups blocked with dimethylpyrazole, preferably with 3,5-dimethylpyrazole are at least 90% with respect to the total number of the blocked isocyanate groups.

6. Polyurethane composition according to any of claims 2 to 5, **characterized in that** in said composition the weight ratio between said prepolymer A and said prepolymer B is between 4:1 and 6:1.

7. Polyurethane composition according to any of claims 2 to 6, **characterized in that** said aliphatic diisocyanate for obtaining said prepolymer B is selected in the group consisting of hexamethylene diisocyanate (HDI), trimethyl hexamethylene diisocyanate, 4,4'-methylenebis (cyclohexyl isocyanate) (HMDI), isophorone diisocyanate (IPDI) and mixtures thereof.

8. Polyurethane composition according to one of the previous claims, **characterized in that** said diisocyanate for obtaining said prepolymer A is selected in the group consisting of 2,4- toluene diisocyanate, 2,6-toluene diisocyanate, 1,5- naphthalene diisocyanate, 4,4'-diphenylmethane diisocyanate (MDI), m-phenylenediiso-propylidene isocyanic acid (TMXDI) and mixtures thereof.

9. Polyurethane composition according to one of the previous claims, **characterized in that** said polyhydroxy compound for obtaining said prepolymer A is selected in the group consisting of polyethylene glycol, polypropylene glycol, polytetramethylene glycol, polyesamethylene glycol, hydroxyl terminated polybutadienes, hydroxyl terminated polyesters from glycols and/or triols with dicarboxylic acids, hydroxyl terminated polycaprolactones and mixtures thereof.

10. Polyurethane composition according to one of the previous claims, **characterized in that** it comprises no solvents and/or diluents.

11. Polyurethane composition according to one of the previous claims, **characterized by** comprising a chain extender selected in the group consisting of:
- bicyclic diamines of formula 1: 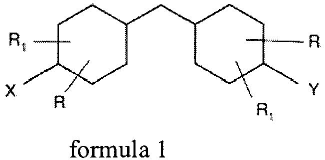
- and tricyclic diamines of formula 2: 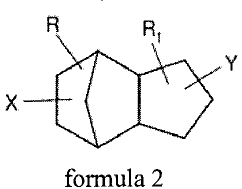 wherein R and R₁ are selected in the group consisting of hydrogen and methyl group; X and Y are selected in the group consisting of NH₂, CH₂NH₂, CH₂NH(CH₂)₃NH₂ and CH₂N((CH₂)₃NH₂)₂.

12. Flexible support coated by using a polyurethane composition according to one of the previous claims.

## Patentansprüche

1. Polyurethanzusammensetzung zum Überziehen von flexiblen Stützen, umfassend:
a) Ein Präpolymer A mit einem durchschnittlichen Molekülgewicht zwischen 5000 und 12000, enthaltend blockierte Isocyanatgruppen, wobei das besagte Präpolymer A erhalten wird durch Reaktion eines Diisocyanats mit einer Polyhydroxyverbindung, die von zwei bis vier reaktive Hydroxylgruppen enthält und ein Molekülgewicht zwischen 1000 und 6000 hat;
b) ein Präpolymer B, enthaltend blockierte Isocyanatgruppen, wobei das besagte Präpolymer B erhalten wird durch Reaktion eines aliphatischen Diisocyanats mit einer Polysiloxanverbindung;
wobei das besagte Präpolymer A und/oder das besagte Präpolymer B Isocyanatgruppen umfasst, welche mit einem Dimethylpyrazol blockiert sind.

2. Polyurethanzusammensetzung gemäß dem vorangehenden Anspruch, **dadurch gekennzeichnet, dass** sie enthält:
c) einen Kettenverlängerer, bestehend aus einem bizyklischen oder trizyklischen Amin.

3. Polyurethanzusammensetzung gemäß einem der vorangehenden Ansprüche, **dadurch gekennzeichnet, dass** sie enthält:
d) wenigstens ein flammenhemmendes Additiv, welches Polyphosphate enthält.

4. Polyurethanzusammensetzung gemäß einem der vorangehenden Ansprüche, **dadurch gekennzeichnet, dass** das besagte Präpolymer A und/oder das besagte Präpolymer B Isocyanatgruppen umfasst, welche mit 3,5-Dimethylpyrazol blockiert sind.

5. Polyurethanzusammensetzung gemäß einem der vorangehenden Ansprüche, **dadurch gekennzeichnet, dass** in dem besagten Präpolymer A und/oder in dem besagten Präpolymer B die besagten, mit Dimethylpyrazol blockierten, vorzugsweisse mit 3,5-Dimethylpyrazol blockierten Isocyanatgruppen, mindestens 90 % der gesamten Anzahl von blockierten Isocyanatgruppen sind.

6. Polyurethanzusammensetzung gemäß einem der Ansprüche 2 bis 5, **dadurch gekennzeichnet, dass** in der besagten Zusammensetzung das Gewichtsverhältnis zwischen dem besagten Präpolymer A und dem besagten Präpolymer B zwischen 4:1 und 6:1 liegt.

7. Polyurethanzusammensetzung gemäß einem der Ansprüche 2 bis 6, **dadurch gekennzeichnet, dass** das besagte aliphatische Diisocyanat zum Erhalten des besagten Präpolymers B ausgewählt ist aus der Gruppe bestehend aus Hexamethylendiisocyanat (HDI), Trimethyl-Hexamethylendiisocyanat, 4,4'-Methylenbis (Cyclohexylisocyanat) (HMDI), Isophoronediisocyanat (IPDI) und Mischungen daraus.

8. Polyurethanzusammensetzung gemäß einem der vorangehenden Ansprüche, **dadurch gekennzeichnet, dass** das besagte Diisocyanat zum Erhalten des besagten Präpolymers A ausgewählt ist aus der Gruppe bestehend aus 2,4-Toluoldiisocyanat, 2,6-Toluoldiisocyanat, 1,5-Naphthalendiisocyanat, 4,4'-Diphenylmethandiisocyanat (MDI), m-Phenylenediiso-Propyliden-Isocyansäure (TMXDI) und Mischungen daraus.

9. Polyurethanzusammensetzung gemäß einem der vorangehenden Ansprüche, **dadurch gekennzeichnet, dass** die besagte Polyhydroxyverbindung zum Erhalten des besagten Präpolymers A ausgewählt ist aus der Gruppe bestehend aus Polyethylenglykol, Polypropylenglykol, Polytetramethylenglykol, Polyhexamethylenglykol, mit der Hydroxylgruppe abgeschlossene Polybutadiene, mit der Hydroxylgruppe abgeschlossene Polyester aus Glykolen und/oder Triolen mit Dicarbonsäuren, mit der Hydroxylgruppe abgeschlossene Polycaprolactone, sowie Mischungen daraus.

10. Polyurethanzusammensetzung gemäß einem der vorangehenden Ansprüche, **dadurch gekennzeichnet, dass** sie keine Lösungsmittel und/oder Verdünnungsmittel umfasst.

11. Polyurethanzusammensetzung gemäß einem der vorangehenden Ansprüche, **dadurch gekennzeichnet, dass** sie einen Kettenverlängerer umfasst, der ausgewählt ist aus der Gruppe bestehend aus:
- bizyklischen Diaminen der Formel 1: 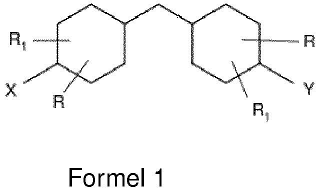
- und trizyklischen Diaminen der Formel 2: 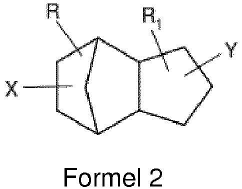 wobei R und R₁ ausgewählt sind aus der Gruppe bestehend aus Wasserstoff und einer Methylgruppe; X und Y sind ausgewählt aus der Gruppe bestehend NH₂, CH₂NH₂, CH₂NH(CH₂)₃NH₂ und CH₂N((CH₂)₃NH₂)₂.

12. Flexible Stütze, überzogen unter Verwendung einer Polyurethanzusammensetzung gemäß einem der vorangehenden Ansprüche.

## Revendications

1. Composition de polyuréthane pour supports flexibles de revêtement, comprenant :
a) un prépolymère A ayant une masse moléculaire moyenne comprise entre 5 000 et 12 000 contenant des groupes isocyanate bloqués, ledit prépolymère A étant obtenu par réaction d'un diisocyanate avec un composé polyhydroxy contenant de deux à quatre groupes hydroxyle réactifs et ayant une masse moléculaire moyenne comprise entre 1 000 et 6 000 ;
b) un prépolymère B contenant des groupes isocyanate bloqués, ledit prépolymère B étant obtenu par réaction d'un diisocyanate aliphatique avec un composé polysiloxane ;
dans laquelle ledit prépolymère A et/ou ledit prépolymère B comprennent des groupes isocyanate bloqués avec un diméthylpyrazole.

2. Composition de polyuréthane selon la revendication précédente, **caractérisée en ce qu'**elle comprend :
c) un agent d'allongement de chaîne consistant en une amine bicyclique ou tricyclique.

3. Composition de polyuréthane selon l'une quelconque des revendications précédentes, **caractérisée en ce qu'**elle comprend :
d) au moins un additif ignifugeant contenant des polyphosphates.

4. Composition de polyuréthane selon l'une quelconque des revendications précédentes, **caractérisée en ce que** ledit prépolymère A et/ou ledit prépolymère B comprennent des groupes isocyanate bloqués avec du 3,5-diméthylpyrazole.

5. Composition de polyuréthane selon l'une quelconque des revendications précédentes, **caractérisée en ce que**, dans ledit prépolymère A et/ou ledit prépolymère B, lesdits groupes isocyanate bloqués avec du diméthylpyrazole, de préférence avec du 3,5-diméthylpyrazole, représentent au moins 90 % du nombre total des groupes isocyanate bloqués.

6. Composition de polyuréthane selon l'une quelconque des revendications 2 à 5, **caractérisée en ce que**, dans ladite composition, le rapport en poids entre ledit prépolymère A et ledit prépolymère B est compris entre 4/1 et 6/1.

7. Composition de polyuréthane selon l'une quelconque des revendications 2 à 6, **caractérisée en ce que** ledit diisocyanate aliphatique pour l'obtention dudit prépolymère B est choisi dans l'ensemble constitué par le diisocyanate d'hexaméthylène (HDI), le diisocyanate de triméthyl-hexaméthylène, le 4,4'-méthylènebis(isocyanate de cyclohexyle) (HMDI), le diisocyanate d'isophorone (IPDI) et leurs mélanges.

8. Composition de polyuréthane selon l'une des revendications précédentes, **caractérisée en ce que** ledit diisocyanate pour l'obtention du prépolymère A est choisi dans l'ensemble constitué par le diisocyanate de 2,4-toluène, le diisocyanate de 2,6-toluène, le diisocyanate de 1,5-naphtalène, le diisocyanate de 4,4'-diphénylméthane (MDI), l'acide m-phénylènediisopropylène-isocyanique (TMXDI) et leurs mélanges.

9. Composition de polyuréthane selon l'une des revendications précédentes, **caractérisée en ce que** ledit composé polyhydroxy pour l'obtention dudit prépolymère A est choisi dans l'ensemble constitué par le polyéthylèneglycol, le polypropylèneglycol, le polytétraméthylèneglycol, le polyésaméthylèneglycol, les polybutadiènes à terminaison hydroxyle, les polyesters à terminaison hydroxyle issus de glycols et/ou triols avec des acides dicarboxyliques, les polycaprolactones à terminaison hydroxy et leurs mélanges.

10. Composition de polyuréthane selon l'une des revendications précédentes, **caractérisée en ce qu'**elle ne comprend pas de solvants et/ou diluants.

11. Composition de polyuréthane selon l'une des revendications précédentes, **caractérisée en ce qu'**elle comprend un agent d'allongement de chaîne choisi dans l'ensemble constitué par :
- les diamines bicycliques de formule 1 : 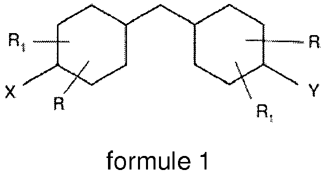
- et les diamines tricycliques de formule 2 : 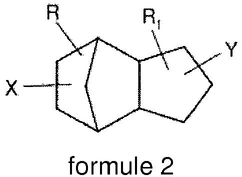 où R et R₁ sont choisis dans l'ensemble constitué par l'hydrogène et le groupe méthyle ; X et Y sont choisis dans l'ensemble constitué par NH₂, CH₂NH₂, CH₂NH(CH₂)₃NH₂ et CH₂N((CH₂)₃NH₂)₂.

12. Support flexible revêtu par utilisation d'une composition de polyuréthane selon l'une des revendications précédentes.
